# EUROPÄISCHE PATENTSCHRIFT

(11) **EP 1 541 462 B1**
(45) Veröffentlichungstag und Bekanntmachung des Hinweises auf die Patenterteilung: **07.05.2008**
(21) Anmeldenummer: 04106132.6
(22) Anmeldetag: 29.11.2004
(51) Int. Cl.: B63H 1/30

(54) **Inversionskinematischer Antrieb für Wasserfahrzeuge**
Inverse kinematic propulsion for watercraft
Propulsion par génération d'un mouvement cinématique inverse pour bateau

(30) Priorität: 12.12.2003 CH 212703
(43) Veröffentlichungstag der Anmeldung: 15.06.2005
(73) Patentinhaber: Fondovalle GmbH, 8636 Wald ZH (CH)
(72) Erfinder: Salgo, Reinhold C., Dr., 8635 Dürnten (CH)
(74) Vertreter: Salgo, Reinhold Caspar

(56) Entgegenhaltungen:
- EP-A- 0 614 028
- DE-C- 589 452
- US-A- 1 093 693
- US-A- 4 880 353
- US-B1- 6 435 995

## Beschreibung

Die vorliegende Erfindung betrifft einen inversionskinematischen Antrieb für Wasserfahrzeuge nach dem Oberbegriff des Patentanspruches 1.

Inversionskinematische Vorrichtungen sind diverse bekannt und gehen in der Regel zurück auf Paul Schatz (1898-1979) entweder direkt als Erfinder oder mittelbar auf ihn als Begründer der Inversionskinematik (siehe auch: Paul Schatz, Rhythmusforschung und Technik, Stuttgart 1998, ISBN 3-7725-0649-6). Solche Vorrichtungen eignen sich beispielsweise besonders zur homogenen Mischung von Stoffen. Eine Möglichkeit dreigliedrige inversionskinematische Gelenkketten für Mischung zu benutzen, besteht darin, das Mittelglied so zu modifizieren, dass es einen Hohlkörper, beispielsweise eine Dose oder ein Fass, aufnehmen kann, in welchem wiederum die zu mischenden Stoffe enthalten sind. Eine zweite Möglichkeit besteht darin, das Mittelglied durch einen geeignet geformten Körper, beispielsweise ein Oloid, zu ersetzen, und die inversionskinematische Vorrichtung in die zu mischende Flüssigkeit einzutauchen. Dabei wird durch die rhythmisch paddelnde Inversionsbewegung des Oloids in der Flüssigkeit eine gerichtete Strömung erzeugt.

Antriebe für inversionskinematische Vorrichtungen mit zwei parallelen, gegenläufigen Achsen sind bekannt, so z.B. aus CH 216 760 (D1), DE 1 145 455 (D2), DE 1 207 750 (D3), WO 80/01830 (D4), EP 0 176 749(D5), SU 1 607 922 (D6), US 5 265 (D7), EP 0 584 301 (D8), EP 0 614 028 (D9), EP 99 920 531 (D10) .

D9 offenbart eine inversionskinematische Vorrichtung unter anderem zur Verwendung als Schiffsantrieb und stellt den nächsten Stand der Technik dar. Ein Schiff, welches mit einem derartigen Antrieb ausgerüstet ist, wird ständig in Querrichtung von einer Seite zur anderen beschleunigt. Diese Querbewegungen sind für Besatzung und Fahrgäste sehr unangenehm. Die Aufgabe der vorliegenden Erfindung besteht in der Schaffung eines Antriebs für Wasserfahrzeuge mittels einer inversionskinematischen Vorrichtung, welche den oben beschriebenen Nachteil nicht aufweist.

Die Lösung der Aufgabe ist wiedergegeben im kennzeichnenden Teil des Anspruches 1 hinsichtlich ihrer wesentlichen Merkmale, in den folgenden Ansprüchen hinsichtlich weiterer vorteilhafter Ausbildungen.

Anhand der beigefügten Zeichnungen wird der Erfindungsgegenstand mittels mehrerer Ausführungsbeispiele näher erläutert.

Es zeigen
- Fig. 1: eine inversionskinematische Vorrichtung mit einem Oloid in der Gelenkkette gemäss dem Stand der Technik in Draufsicht,
- Fig. 2: ein erstes Ausführungsbeispiel eines Antriebs jeweils nach einer Vierteldrehung während einer vollständigen Achsumdrehung in Draufsicht,
- Fig. 3: schematische Darstellungen verschiedener Kopplungsvarianten für die beiden Gelenkketten,
- Fig. 4: schematische Darstellungen zweier Antriebsanordnungen für gekoppelte Achsen,
- Fig. 5: eine schematische Darstellung eines Ausführungsbeispiels mit zwei Antrieben,
- Fig. 6: eine schematische Darstellung eines Ausführungsbeispiels mit einem Motor und zwei Differentialgetrieben,
- Fig. 7: eine schematische Darstellung eines Ausführungsbeispiels mit geregelten direkt die Achsen treibenden Motoren.

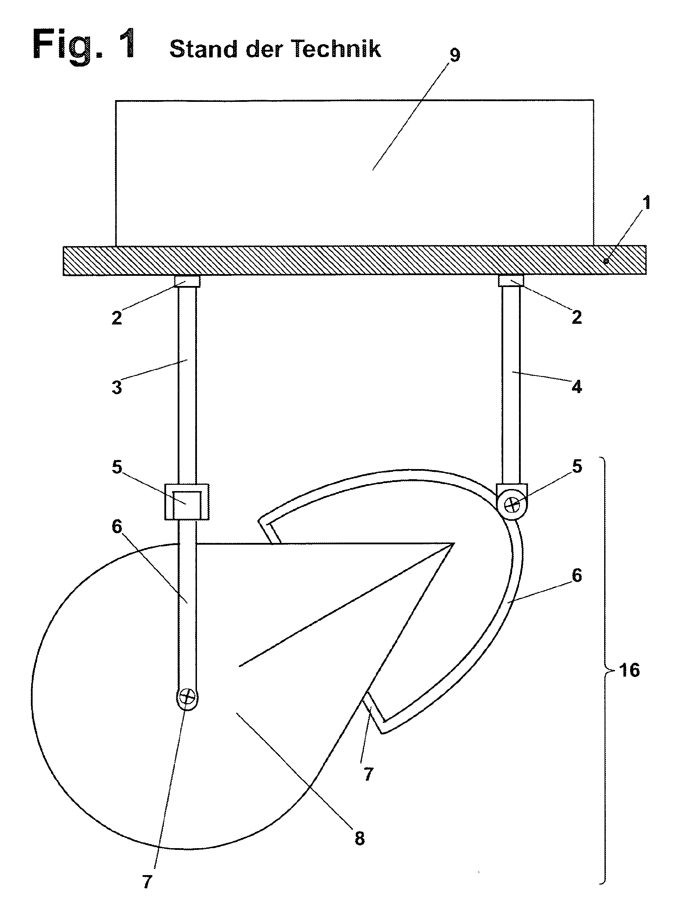

Fig. 1 zeigt eine inversionskinematische Vorrichtung mit einem Oloid als Mittelglied einer halben Gelenkkette 16 nach Bricard (1897) im Folgenden Gelenkkette 16 genannt gemäss dem Stand der Technik. Solche Vorrichtungen werden beispielsweise als Rührwerke für Flüssigkeiten eingesetzt. Eine Grundplatte 1 trägt, in je einem Hauptlager 2 drehbar gelagert, zwei Achsen 3, 4. Diese sind parallel zueinander und bewegen sich gegenläufig. Jede Achse 3, 4 trägt an ihrem Ende ein Gelenk 5, dessen Drehachse senkrecht steht auf der Richtung der Achse 3, 4. An das Gelenk 5 schliesst sich je eine Gabel 6 an, im Folgenden Randglied 6 genannt. Die Enden der Gabeln 6 umfassen je ein weiteres Gelenk 7, deren Achsen wiederum senkrecht stehen zu denjenigen der Gelenke 5. Die Gelenke 7 sind verbunden durch ein Mittelglied 8, welches eine Stange, ein rohrartiges Element, ein oloidförmiger Körper sein oder eine weitere geeignete Form aufweisen kann.

Der Antrieb einer solchen Vorrichtung ist infolge der ungleichförmigen Charakteristik der beiden Winkelgeschwindigkeiten der Achsen 3, 4 nicht mit einem direkten motorischen mechanischen Antrieb zu bewerkstelligen. D1 bis D10 offenbaren diverse Möglichkeiten zur Lösung dieser Aufgabe als Stand der Technik.

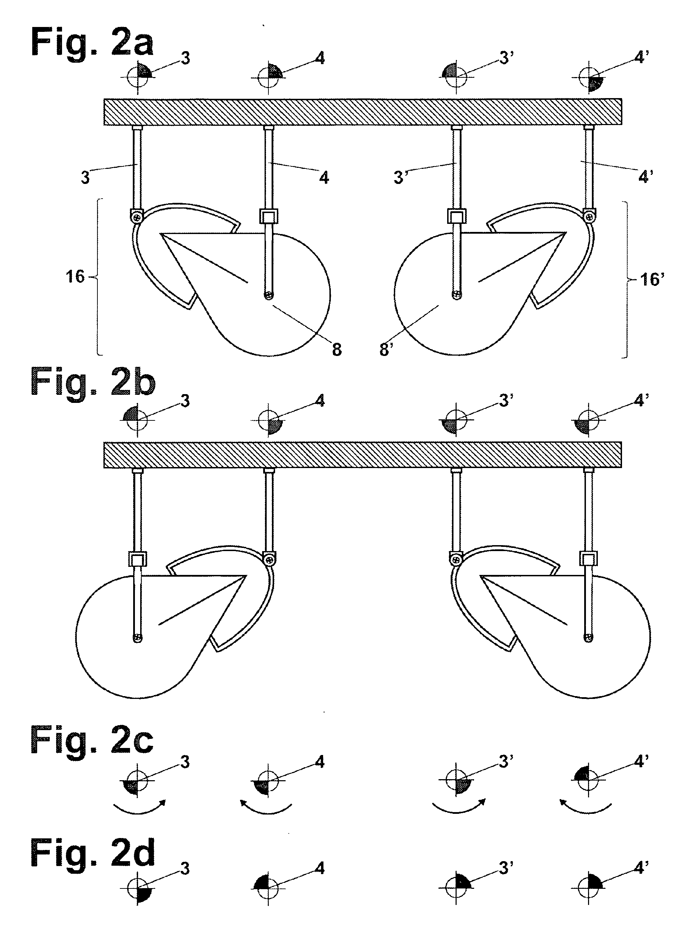

Wird eine einzelne Gelenkkette 16 als Antrieb für ein Wasserfahrzeug eingesetzt, so ergeben sich Probleme wechselnder Lasten infolge der pulsierenden Bewegung mit vier Pulsen oder Paddelschlägen pro vollem Umlauf der Achsen 3, 4. Das Hauptproblem stellen dabei die wechselnden Kräfte in Richtung der Verbindungslinie der beiden Achsen 3,4, quer zur Fahrtrichtung, dar. Diese hydro- und massendynamischen Kräfte führen dazu, dass ein Schiff, welches mit einem solchen Antrieb ausgerüstet ist, ständig in Querrichtung von einer Seite zur anderen beschleunigt wird. Die unerwünschten Querbeschleunigungen können durch die erfindungsgemässe Verwendung zweier miteinander synchronisierter Gelenkketten 16 verhindert werden. In den Figuren 2a bis d ist ein erstes Ausführungsbeispiel mit zwei auf einer Querachse nebeneinander montierten Gelenkketten 16 dargestellt. Diese Gelenkketten 16 sind so miteinander gekoppelt, dass sie um r/2 (90°) oder 3r/2 (270°) phasenverschoben drehen. Bei einer solchen Phasenverschiebung der Achsen 3,4 gegenüber den Achsen 3',4' führen die Mittelglieder 8,8' gegenläufige Bewegungen aus. Ein rechtsseitigen Paddelschlag des linken Oloids 8 wird von einem linksseitigen Paddelschlag des rechten Oloids 8' begleitet und umgekehrt. Dadurch heben sich die durch die Paddelschläge der Oloide 8,8' erzeugten dynamischen Horizontalkräfte gegenseitig auf.

Fig. 2a zeigt das Ausführungsbeispiel in Ausgangsposition, die Phasenverschiebung der Achsen 3',4' gegenüber 3,4 beträgt 90°. Das rechte Mittelglied 8' eilt dem linken Mittelglied 8 somit im Wesentlichen um eine Vierteldrehung der Achsen 3',4' voraus. Fig. 2b zeigt das Ausführungsbeispiel nach einer ersten Vierteldrehung der gekoppelten Gelenkketten 16,16'. In den Fig. 2c,d sind nur noch die symbolischen Achsdarstellungen gezeigt. Aus den symbolischen Achsdarstellungen sind die jeweiligen Achsstellungen und die Drehrichtungen der Achsen ersichtlich. Die Draufsichten auf die gekoppelten Gelenkketten 16,16' entsprechen den in den Fig. 2a,b gezeigten und wurden nicht erneut dargestellt. Der Fig. 2c entspricht dieselbe Draufsicht wie in Fig. 2a gezeigt (2d analog 2b), mit dem nicht sichtbaren Unterschied, dass die Mittelglieder 8,8' dem Betrachter unterschiedliche Seiten zuwenden. In Fig. 2c sind zudem mit Pfeilen die Drehrichtungen der Achsen 3,4,3',4' angedeutet. Diese Drehrichtung gilt für die ganze Abfolge mit den Momentansichten in den Fig. 2a bis 2d.

Im Falle der dargestellten Rotationsrichtung der Achsen 3,4,3',4' schaufeln die Mittelglieder 8,8' das Wasser in Richtung des Betrachters, das heisst, die Antriebswirkung würde ein Wasserfahrzeug vom Betrachter wegbewegen.

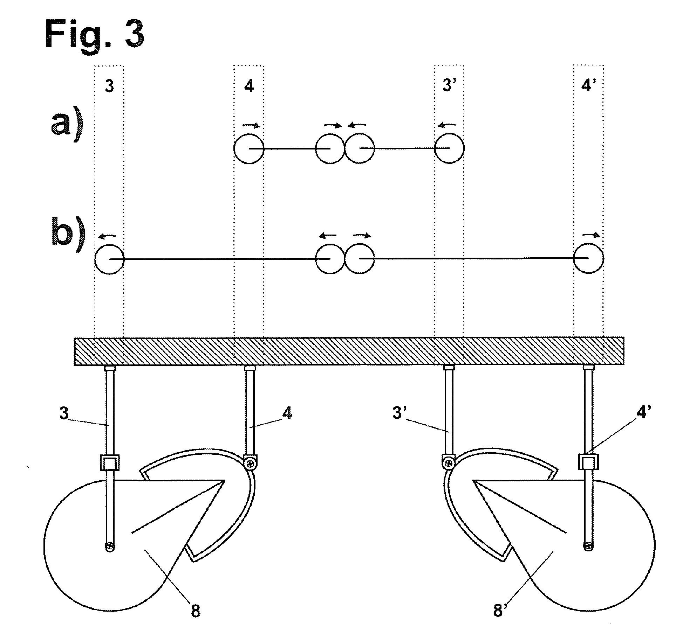

Die Fig. 3a,b zeigen verschiedene Ausführungsbeispiele für die mechanische Kopplung der beiden Mittelglieder 8,8'. In den Fig. 3a,b sind die jeweils die entgegengesetzte Drehrichtung und gleiche Rotationsgeschwindigkeit aufweisenden Achsen 4,3' oder 3,4' mechanisch gekoppelt, beispielsweise mittels Zahnrädern und/oder Zahnriemen. Für derartige mechanische Koppelungen sind dem Fachmann aus der Getriebetechnik viele Möglichkeiten bekannt. Es wird daher an dieser Stelle nicht näher darauf eingegangen.

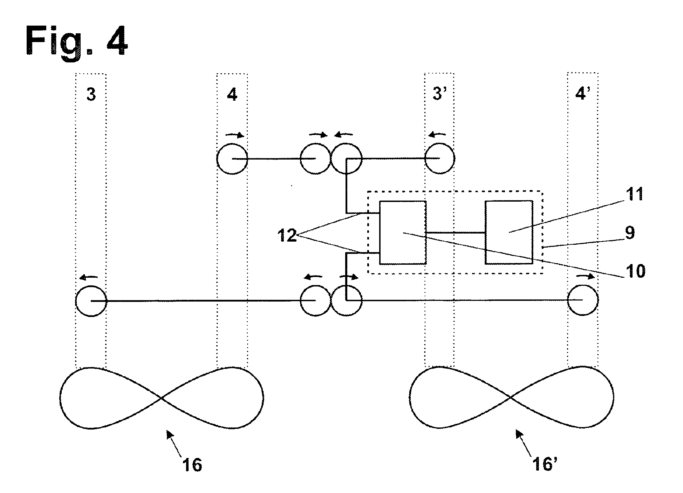

Die Fig. 4 zeigt ein Ausführungsbeispiel, wie gemäss den in Fig. 3 gezeigten Ausführungsbeispielen gekoppelte Gelenkketten 16,16' mit einer Krafterzeugungs und -verteilungseinheit 9, im Folgenden Antrieb 9 genannt, angetrieben werden können. Der Antrieb 9 besteht hier beispielsweise aus einem über ein Differentialgetriebe 10 mit den primären Antriebsachsen 12 verbundenem Motor 11. Die primären Antriebsachsen 12 treiben entweder die vier paarweise gemäss den Fig. 3a,b gekoppelten Achsen 3,4,3',4'.

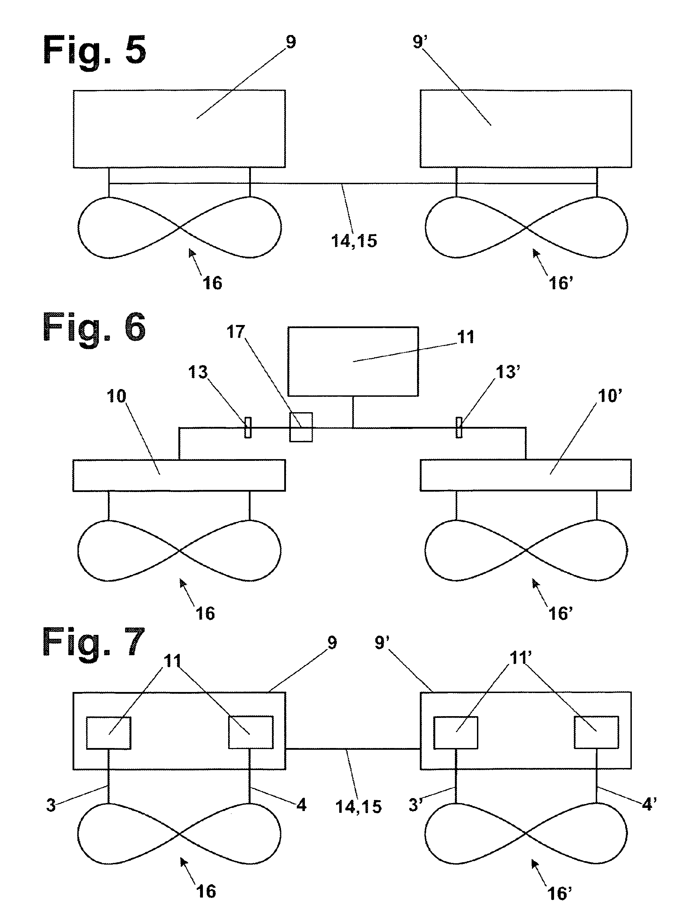

Fig. 5 zeigt ein weiteres Ausführungsbeispiel mit zwei vollständigen Antrieben 9,9' welche mittels mechanischer Kopplung 14, gemäss den Fig. 3 oder mittels elektronischer Kopplung 15 in der gewünschten Phasenverschiebung gehalten werden.

Fig. 6 zeigt ein Ausführungsbeispiel mit zwei Differentialen 10,10' und einem Motor 11. Die Kopplung der Gelenkketten 16,16' kommt hier durch den synchronen Antrieb der beiden Differentiale 10,10' zustande. Eine erfindungsgemässe Erweiterung sind die Kupplungen 13,13' welche das Auskuppeln einer der beiden Gelenkketten 16,16' ermöglicht. Diese Kuppelbarkeit eröffnet vorteilhafte Möglichkeiten für den Betrieb des Schiffsantriebs beispielsweise bei langsamen Manövern auf engem Raum. Wichtig ist bei diesem Ausführungsbeispiel, dass Mittel, elektronisch oder mechanisch vorhanden sind, welche nach einem Auskuppeln einer Gelenkkette 16,16' wieder die gewünschte Phasenverschiebung von 90° oder 270° zwischen den Gelenkketten 16,16' herstellen und konstant halten. Denkbar sind des Weiteren zuschaltbare Wendegetriebe, welche einen gegenläufigen Betrieb der Gelenkketten 16,16' ermöglichen, womit beispielsweise das Wenden eines Wasserfahrzeuges auf einem engen Kreis mit einem Durchmesser, der im Wesentlichen der Fahrzeuglänge entspricht, eine sogenannte Tellerwende, möglich werden.

Fig. 7 zeigt ein letztes Ausführungsbeispiel mit Antrieben 9, welche je zwei Elektromotoren 11 mit variabel geregelter Drehzahl aufweisen, welche die Achsen 3,4,3',4' direkt antreiben. Hier erfolgt die Kopplung der Gelenkketten 16,16' wiederum mittels mechanischer Kopplung 14 oder elektronischer Kopplung. Die elektronische Lösung hat den Vorteil, dass die beiden Gelenkketten 16,16' völlig unabhängig voneinander betrieben werden könnnen. Vorteile bringt dies beispielsweise beim Manövrieren. Mit Sensoren zur Bestimmung des aktuellen Drehwinkels der Achsen 3,4,3',4', kann anschliessend die richtige Phasenverschiebung beispielsweise mittels intelligenter Schaltungen oder computerunterstützt problemlos wiederhergestellt werden.

Es können mehrere Paare gekoppelter Gelenkketten 16,16' an einem Schiffsrumpf angebracht werden, beispielsweise im Heck und im Bug oder auf beiden Seiten des Wasserfahrzeuges. Dadurch kann beispielsweise eine verbesserte Manövriereigenschaft erreicht werden. Bei einem Mehrrumpfboot kann das oder die Paare gekoppelter Gelenkketten 16,16' auch zwischen den Rümpfen angeordnet werden.

## Patentansprüche

1. Inversionskinematischer Antrieb für Wasserfahrzeuge, mit einer dreigliedrigen inversionskinematischen Gelenkkette (16) angetrieben über jeweils zwei parallele Antriebsachsen (3, 4, 3' , 4'), mit mindestens einem Antrieb (9)
**dadurch gekennzeichnet, dass**
mindestens ein Paar Gelenkketten (16,16') auf einer Linie angebracht sind, wobei Mittel vorhanden sind, um diese beiden Gelenkketten (16,16') mit einer konstanten Phasenverschiebung um einen Drehwinkel von im Wesentlichen -π/2 (- 180°/2) plus ein beliebiges Vielfaches von π (180°) betreiben zu können.

2. Antrieb für Wasserfahrzeuge nach Patentanspruch 1, **dadurch gekennzeichnet, dass** die Mittel zur Einhaltung einer konstanten Phasenverschiebung aus einer mechanischen Koppelung (14) der beiden Gelenkketten (16,16') besteht.

3. Antrieb für Wasserfahrzeuge nach Patentanspruch 1, **dadurch gekennzeichnet, dass** die Mittel zur Einhaltung einer konstanten Phasenverschiebung aus einer elektronischen Koppelung (15) der beiden Gelenkketten (16,16') besteht.

4. Antrieb für Wasserfahrzeuge nach einem der Patentansprüche 2 oder 3, **dadurch gekennzeichnet, dass** jeweils die gegenläufig und gleich schnell drehenden Achsen (3,4' und 4,3') unterschiedlicher Gelenkketten (16,16') miteinander gekoppelt sind.

5. Antrieb für Wasserfahrzeuge nach einem der Patentansprüche 1 bis 4, **dadurch gekennzeichnet, dass** mindestens eine der Gelenkketten (16,16') mechanisch vom Antrieb ausgekuppelt werden kann.

6. Antrieb für Wasserfahrzeuge nach einem der Patentansprüche 1 bis 5, **dadurch gekennzeichnet, dass** alle Achsen (3,3',4,4') mittels je eines Elektromotors angetrieben werden.

7. Antrieb für Wasserfahrzeuge nach Patentanspruch 6, **dadurch gekennzeichnet, dass** die Gelenkketten (16,16') in gegenläufigem Drehsinn betrieben werden können.

8. Verwendung eines inversionskinematischen Antriebs gemäss einem der Patenansprüche 1 bis 7 als Antrieb für ein Wasserfahrzeug, welches über solare Stromerzeugungsanlagen verfügt und mit Solarstrom betrieben werden kann.

## Claims

1. Inversion kinematic drive for watercraft, with a three-member inversion kinematic link chain (16) driven by two respective parallel driving axles (3, 4, 3', 4') with at least one drive (9), **characterized in that** at least one pair of link chains (16, 16') are arranged on a line, wherein means are provided that enable operation of these two link chains (16, 16') at a constant phase shift by a rotational angle of essentially π/2 (-180°/2) plus any multiple of π (180°).

2. The drive for watercraft according to claim 1, **characterized in that** the means for maintaining a constant phase shift consist of a mechanical coupling (14) of the two link chains (16, 16').

3. The drive for watercraft according to claim 1, **characterized in that** the means for maintaining a constant phase shift consist of an electronic coupling (15) of the two link chains (16, 16').

4. The drive for watercraft according to one of claims 2 or 3, **characterized in that** the respective axles (3, 4' and 4, 3') of varying link chains (16, 16') rotating in opposite directions and at the same speed are coupled to each other.

5. The drive for watercraft according to one of claims 1 to 4, **characterized in that** at least one of the link chains (16, 16') can be mechanically decoupled from the drive.

6. The drive for watercraft according to one of claims 1 to 5, **characterized in that** all axles (3, 3', 4, 4') are driven by one electric motor each.

7. The drive for watercraft according to claim 6, **characterized in that** the link chains (16, 16') can be operated counter-rotationally.

8. Use of an inversion kinematic drive according to one of claims 1 to 7 as the drive for a watercraft, which has solar power generating systems and can be operated with solar power.

## Revendications

1. Entraînement à cinématique d'inversion pour bateaux, comprenant une chaîne articulée (16) à trois éléments et à cinématique d'inversion entraînée par respectivement deux axes d'entraînement (3, 4, 3', 4') parallèles, avec au moins un entraînement (9) **caractérisé en ce qu'**au moins une paire de chaînes articulées (16, 16') sont placées sur une ligne, des moyens étant présents pour pouvoir exploiter ces deux chaînes articulées (16, 16') avec un déphasage constant d'un angle de rotation de pratiquement -π/2 (-180°/2) plus un multiple quelconque de π (180°).

2. Entraînement pour bateaux selon la revendication 1, **caractérisé en ce que** les moyens pour respecter un déphasage constant sont constitués d'un accouplement (14) mécanique des deux chaînes articulées (16, 16').

3. Entraînement pour bateaux selon la revendication 1, **caractérisé en ce que** les moyens pour respecter un déphasage constant comprennent un accouplement électronique (15) des deux chaînes articulées (16, 16').

4. Entraînement pour bateaux selon l'une quelconque des revendications 2 ou 3, **caractérisé en ce qu'**à chaque fois les axes (3, 4' et 4, 3') tournant dans le sens contraire et à la même vitesse de différentes chaînes articulées (16, 16') sont couplés les uns avec les autres.

5. Entraînement pour bateaux selon l'une quelconque des revendications 1 à 4, **caractérisé en ce qu'**au moins l'une des chaînes articulées (16, 16') peut être dissociée au plan mécanique de l'entraînement.

6. Entraînement pour bateaux selon l'une quelconque des revendications 1 à 5, **caractérisé en ce que** tous les axes (3, 4, 4, 4') sont entraînés chacun au moyen d'un moteur électrique.

7. Entraînement pour bateaux selon la revendication 6, **caractérisé en ce que** les chaînes articulées (16, 16') peuvent être exploitées dans le sens de rotation contraire.

8. Utilisation d'un entraînement à cinématique d'inversion selon l'une quelconque des revendications 1 à 7 comme entraînement pour un bateau, qui dispose d'installations solaires de production de courant et peut être exploité avec le courant solaire.
